# EUROPEAN PATENT SPECIFICATION

(11) **EP 4 481 309 B1**
(45) Date of publication and mention of the grant of the patent: **23.09.2026**
(21) Application number: 23180086.3
(22) Date of filing: 19.06.2023
(51) Int. Cl.: F27B 7/20, C04B 7/43, C04B 7/44

(54) **IDC - INDIRECT CALCINER**
IDC- INDIREKTER CALCINATOR
FOUR DE CALCINATION INDIRECTE IDC

(43) Date of publication of application: 25.12.2024
(73) Proprietor: Alite GmbH, 31535 Neustadt (DE)
(72) Inventor: Hammerich, Jörg, 31535 Neustadt (DE)
(74) Representative: Lohr, Jöstingmeier & Partner Patent- und Rechtsanwälte mbB

(56) References cited:
- EP-A1- 2 701 121
- EP-A1- 3 074 360
- EP-B1- 0 656 071
- EP-B1- 3 074 360
- WO-A1-2022/167424
- CN-A- 104 797 352
- JP-A- 2004 231 424

## Description

### Field of the invention

The invention relates to a calciner for a cement clinker plant. The calciner comprises a first duct with a first raw meal inlet and a first raw meal outlet being in fluid communication via a first duct volume. The calciner further comprises a first conduit with a first heat carrier fluid inlet and a first heat carrier fluid outlet being in fluid communication via a first conduit volume.

### Description of the related art

Cement clinker is an important intermediate product in Portland Cement manufacturing. In present cement clinker manufacturing, limestone and additives are ground in a so-called raw mill, homogenized, and subsequently preheated using kiln exhaust gas. Next, the preheated raw meal is calcined, i.e., decarbonized. This calcination takes place at temperatures of about 900°C in a so called *calciner.* The calciner is usually a gas-solid direct heat exchanger, i.e. a heat exchanger in which a heat carrier fluid is in direct contact with the raw meal to be heated. The hot calcined raw meal exits the calciner and is transported by the fumes produced in the calciner (fume jet transport) to a cyclone. In the cyclone, the hot calcined raw meal is separated from the fumes and falls down into the raw-meal inlet of the kiln.

A problem of this well-established and highly optimized process are the CO₂ emissions of the direct heat exchange calciner and the kiln: It has been estimated that about 8% of the overall man-made CO₂ emission is associated to the cement clinker manufacturing process (Olivier, Janssens-Maenhout, Muntean and Peters, Trends in global CO2 emissions: 2016 Report, The Hague: PBL Netherlands Environmental Assessment Agency, http://edgar.jrc.ec.europa.eu/news_docs/jrc-2016-trends-in-global-co2-emissions-2016-report-103425.pd, accessed 22 Jan. 2020, page 65).

The CO₂ emission of the cement clinker process is in part inherent to the process, as limestone (CaCO₃) is calcined into lime (CaO) in the calciner, thereby releasing CO₂. The corresponding chemical reaction is described by the formula CaCO₃ + heat→ CaO + CO₂ and is thus an endothermal chemical reaction. This reaction is herein referred to as *calcination or decarbonization.* Another portion of the CO₂ is produced by burning fuel to provide the thermal energy driving the above endothermic calcination in the calciner, to sinter the lime with the other constituents of the raw meal to clinker in the kiln and to produce the electrical power for operating the plant. Depending on the design and operating parameters of a cement clinker line, approximately 50-60% of the released CO₂ are released in the calcination step. The other approximately 50-40% are released by said burning fuel (see e.g., Johanna Lehne and Felix Preston, Making Concrete Change Innovation in Low-carbon Cement and Concrete, Chatham House Report, London 2018). These other 50-40% of the CO₂-emission can at least in principle be avoided by using sustainable fuels and/or simply so called "green" electricity.

It has been suggested to capture and store the CO₂ produced in the clinker manufacturing process. A promising approach for capturing the CO₂ is the so-called Calcium Looping (CaL). The CaL consists essentially of capturing CO₂ in flue gases by an exothermal reaction of the CO₂ with CaO to CaCO₃. The reaction reads CaO + CO₂ → CaCO₃ +heat, is thus exothermal and referred to as carbonation. Subsequently, the CaCO₃ is decarbonized (i.e., calcined) in a calciner, thereby releasing CO₂ and CaO, enabling to thereby obtain at least essentially pure CO₂. The CO₂ can be stored, e.g., in geological formations (commonly referred to as CO₂-sequestration) or used in other processes. In any case it is not released to the environment. The CaO can be subjected to carbonation, again.

As suggested in FR 2 921059 A1, the CaL can be integrated into the cement clinker process, i.e., the calciner for (pre-)calcination of the raw meal is the source of the CaO being required in the carbonation step of the CaL. The CaCO₃ obtained in the carbonation step is subsequently provided to the calciner to obtain fresh CaO, i.e., a portion of the CaO/CaCO₃ circles in the process. In this approach, the calciner is necessarily an indirect heat exchanger for heating the CaCO₃, i.e. a heat exchanger in which the heat source and the CaCO₃ remain separated and are only in thermal contact. This enables to remove almost pure CO₂ from the calciner. This almost pure CO₂ can be stored or used for other industrial or agricultural purposes. A first portion of the calcined raw meal is provided to the kiln to complete the transformation of the raw meal into clinker. The remaining portion of the calcined raw meal is provided to a carbonator. In the carbonator, the CaO in the calcined raw meal reacts with the CO₂ contained in the flue gases from the kiln to CaCO₃. The flue gases from the kiln are thus subjected to CO₂-removal. The CO₂ being bound in CaCO₃ produced in the carbonator is added to the raw meal entering the calciner, where the CO₂ is released. Thus, essentially all CO₂ being produced in the cement clinker process can be separated and stored or used as source for the chemical industry. A challenge in this process is to provide a reliable, low maintenance and affordable indirect heat exchange calciner, as the conditions in the calciner are harsh due to the high temperatures required for calcination and high flow rates of hot abrasive raw meal.

EP 3074360 A1 relates to a process and an apparatus for manufacturing portland cement. JP 2004 231424 A relates to an indirect heating type lime kiln.

### Summary of the invention

The problem to be solved by the invention is to provide an indirect heat exchange calciner.

Solutions to the problem are described in the independent claims. The dependent claims relate to further improvements of the invention.

The invention provides a calciner for a cement clinker manufacturing line. In more detail an indirect heat exchange calciner. The heat source is a heat carrier fluid. In an example, the heat carrier fluid can be hot kiln exhaust gas, a tertiary air stream and/or fuel being burnt in the calciner.

The calciner comprises at least a first raw meal duct ('duct' for short) with a first raw meal inlet and a first raw meal outlet being in fluid communication via a first duct volume. In other words, the duct is configured to provide a first raw meal flow from the first duct inlet to the first duct outlet via a first duct volume. Only for linguistic simplicity, herein the duct's raw meal inlet and a raw meal outlet are referred to as duct inlet and duct outlet, respectively. 'First' is used only as denominator to distinguish from optional second, third, ... *n^{th},* ducts.

The calciner may further comprise at least a first conduit with a first heat carrier fluid inlet and a first heat carrier fluid outlet (for short: conduit inlet and conduit outlet, respectively). The first conduit inlet and the first conduit outlet are in fluid communication via a first conduit volume. Hence, the first conduit is configured to provide a first heat carrier fluid flow from the first conduit inlet to the first conduit outlet. 'First' is used only as denominator to distinguish from optional second, third, ... *m^{th},* conduits.

Preferably, the first duct volume is delimited (at least partially) by the first duct facing surface of a first wall and the conduit volume is delimited (at least partially) by a first conduit facing surface of said at least one first wall. The first wall is thus in between of the duct volume and the conduit volume and separates the duct volume and the conduit volume from each other, while being configured to provide a thermal connection. In operation, heat being provided to the calciner by the heat carrier fluid heats the wall up and the heated wall then transfers heat to the raw meal. As a consequence of the transferred heat, the CaCO₃ in the raw meal decomposes into CaO and CO₂. By the decomposition, the previously uncalcined raw meal is converted into calcined raw meal. The calcined raw meal may be provided to a raw meal inlet of a kiln.

Preferably, at least the first wall comprises or consists of a first wall material. The first wall has a first surface at a first side and a second surface at as second side. In a preferred example the two sides face in opposite directions. The first surface and the second surface are separated by the wall material. The wall material includes or consists of a refractory and/or mineral building materials like ceramic, concrete, brick, etc. and can generally be described as a preferably inorganic and preferably non-metallic building material. The first wall provides a support structure and at the same time is a heat transfer element. In the past, sheet metal was used in indirect calciners to separate the duct and the conduit, however, in the temperature range at or above 1100°C, sheet metal constructions become soft and instable. Further, the metal was subjected to abrasion due to the raw-meal flow and by particles being transported by the heat carrier fluid (e.g. kiln dust). The walls of mineral material, however, remain solid at these elevated temperatures and thus provide a self-supporting structure being much cheaper than sheet metal constructions requiring additional support structures and/or expensive alloys. Further, longevity is enhanced as well.

As already apparent, the calciner, preferably, has a second wall with a second duct facing surface and a second conduit facing surface. The second duct facing surface preferably delimits the first duct as well. The second wall allows to increase the heat transfer to the raw meal in the first duct. For example, the calciner may further comprise a second conduit with a second heat carrier fluid inlet and a second heat carrier fluid outlet being in fluid communication via a second conduit volume. The second conduit facing surface may delimit the second conduit.

Preferably, the calciner comprises at least a number of *l* walls, wherein at least *l* - 2 of the *l* walls have (or has, if *l* = 3) a duct facing side with a duct facing surface and a conduit facing side with a conduit facing surface. The *i^{th}* of the at least *l* - 2 duct facing surfaces is separated by the *i^{th}* of the at least *l* - 2 wall materials from the *i^{th}* of the at least *l* - 2 conduit facing surfaces.

The calciner may comprise a number of n ducts wherein preferably $\frac{l}{2} - 1 \geq n$ and each of the n ducts are/is delimited by at least two of the at least *l* - 2 duct facing surfaces.

The calciner may preferably further comprise a number of m conduits, wherein at least *l*/2 - 1 ≥ *m* conduits are delimited by at least two of the at least *l* - 2 conduit facing surfaces.

These combinations of n ducts, m conduits and *l* walls provide a very efficient heat exchange with reduced cost of construction. For example, a set of *l* walls may separate a number $m = \frac{l}{2}$ conduits and $n = \frac{l}{2} - 1$ ducts, wherein each of the $\frac{l}{2} - 1$ ducts is delimited by two walls that as well delimit a conduit. Hence, in operation, the heat carrier flow through two conduits contributes to heating the raw meal in the duct in between of the two conduits that so to speak embrace the duct. In other words, a sequence of m=n+1 conduits and n ducts can be alternatingly arranged, wherein each duct is in between of two neighboring conduits and separated from these by a wall. Arranging the sequence along a circular line allows to increase the number of ducts to *n* = *l*/*2 ,* i.e. *n*=*m=l*/*2.* In a further example, the *l* walls may as well be concentric. In this case only *l* = *n* +*m* walls are required to separate n ducts and m conduit by said walls. Only the outermost wall has only a conduit or a duct facing side (but not both), i.e. *l* - 1 walls have both a duct facing surface and conduit facing surface.

In a preferred example, at least the first duct has at least one Carbon Dioxide outlet. Particularly preferred, each of the n ducts, or at least a subset of the n ducts, has at least one Carbon Dioxide outlet. The Carbon Dioxide outlet (CO₂ outlet) may be connected to a dust collector. Example dust collectors are electrostatic precipitators, inertial separators, filters, settling chambers, etc. The optional dust collector is hence configured to receive a CO₂-stream comprising the CO₂ being released in the calcination process and raw meal dust. The optional dust collector is further configured to separate raw meal dust from a gaseous fraction comprising the CO₂. The separated raw meal dust may be provided by a conveyor to the duct inlet, to the duct outlet and/or to a kiln's raw meal inlet and/or to a carbonation reactor. The gaseous fraction comprises preferably mainly CO₂, i.e. the CO₂ being released in the calcination process. Other constituents of the gaseous fraction can be reduced by preheating the raw meal prior to providing it to the duct inlet, wherein the preheating temperature should be below the calcination temperature. Thereby, other components that enter the gas phase slightly below the calcination temperature can be separated from the CO₂ being released in the calcination step.

The optionally dedusted CO₂-stream exiting the at least one CO₂ outlet is preferably provided to an inlet of a (preferably indirect) heat exchanger and used to preheat a second heat carrier fluid and/or raw meal. Accordingly, at least one CO₂-outlet of the calciner is preferably connected to a hot gas inlet of a raw meal preheater or of a heat carrier fluid preheater and/ or a steam boiler. In all examples, CO₂ is cooled down and the thereby released thermal energy is recuperated and can be used as process energy.

Preferably, the first duct is a chute. This eases conveying the hot raw meal stream and provides for an effective heat exchange.

In a preferred example, the optional CO₂ outlet of the duct is located above the raw meal inlet. This measure reduces the amount of dust being removed from the duct via the CO₂ outlet and hence increases the CO₂ concentration in the CO₂ -stream.

Further, in a preferred embodiment, at least one of the conduit facing surfaces may have at least one, preferably multiple protrusions extending into the conduit. These protrusions increase the surface area of the conduit facing surface and thereby the heat transfer via the respective wall. In addition, these protrusions are preferably configured to disturb a laminar flow of the heat carrier fluid. In operation, these protrusions thereby mix cooled-down boundary layers of the heat carrier fluid with still hot inner 'layers' of the heat carrier fluid (assuming a laminar flow to be a stack of layers having different flow velocities) and thus improves the heat transfer further.

The conduit may further comprise a fuel inlet. The fuel inlet turns the conduit into a reactor for combusting the fuel to thereby generate thermal energy being transferred via the wall(s) to the duct(s). The fuel inlet may itself be considered as a heat carrier fluid inlet, i.e. as the conduit inlet, as the energy provided to the conduit is provided by the fuel inlet. Conceptionally, it does not make a difference if the heat is generated in the conduit by burning fuel therein or if an already hot heat carrier fluid is provided via the conduit inlet to the conduit volume. Preferably, both alternatives are combined. For example, *"an already hot heat carrier fluid"* can be a tertiary air stream being provided by a clinker cooler that may be mixed with a fuel. The mixture reacts and thereby releases energy, being provided to the calciner. In this example, the conduit inlet may be connected to a tertiary air duct (*"duct"* in *tertiary air duct* does not imply a raw meal flow; *tertiary air ducts* are known in the art and the term shall be understood accordingly, see e.g. US20130203005A1. Tertiary air ducts are connections providing a preheated oxygen source (e.g. air) from a clinker cooler to a calciner.)

As indicated initially, the calciner is preferably a part of a cement clinker line, but may as well be used in other industrial fields, e.g. in a CaL-process.

Besides of the calciner, the cement clinker line may further comprise a kiln with a first end and a second end, wherein the first end comprises a calcined raw meal inlet and an exhaust gas outlet. The kiln's second end may comprise a hot clinker outlet. The hot clinker outlet may be configured to discharge hot clinker into a clinker cooler. Preferably, the duct outlet is connected via a calcined raw meal conveyor with the kiln's calcined raw meal inlet. Alternatively or additionally, the kiln's exhaust gas outlet may be connected to the calciner's heat-carrier fluid inlet.

The cement clinker line may further comprise a clinker cooler with a coolant inlet and a coolant outlet and with a hot clinker inlet configured to receive the hot clinker from the kiln. The cooler may further comprise a cool clinker outlet. The hot coolant outlet may be connected with the conduit's heat carrier inlet, e.g., via a tertiary air duct. This provides an efficient use of the energy recuperated from the hot cement clinker.

A duct and a conduit both provide a fluid connection. Herein we use the two terms to distinguish the purpose of connection, the term duct is used if the connection is configured to provide a raw-meal flow and the term conduit is used if the connection is configured to provide flow of a heat-carrier fluid (exception: tertiary air duct as explained above).

### Description of Drawings

In the following the invention will be described by way of example, without limitation of the general inventive concept, on examples of embodiment with reference to the drawings.
Figure 1 shows a first example of a calciner.
Figure 2 shows a second example of a calciner.
Figure 3 shows a structure of an example calciner.
Figure 4A and 4B show a fourth example of a calciner.
Figure 5 shows a cement clinker line.

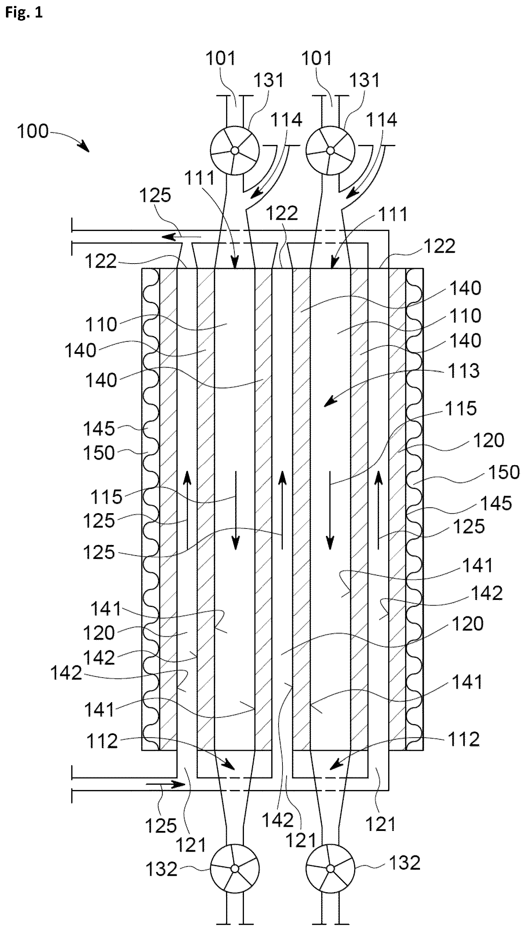

Fig. 1 shows a first example of a calciner 100. The calciner has a number of *n* ducts 110. In the depicted example, *n* = 2, but this is only an example. Each duct has a raw meal inlet 111 and a raw meal outlet 112, being in fluid communication via a duct volume 113. In the depicted example, the duct inlet 111 is above the duct outlet 112. Raw meal can be provided via at least one inlet feeder 131 to the duct inlet 111 and hence to the duct volume. The raw meal in the duct volumes 113 may be conveyed in a raw meal conveying direction 115 to the duct outlet 112 and may be removed from the calciner 100 via a duct outlet feeder 132. In the depicted example, the ducts 110 are chutes configured to convey the raw meal due to gravity, but this is only a preferred example. The ducts 110 may further comprise a CO₂ outlet 114 being in fluid communication with the duct volume 113.

The calciner may further comprise a number of *m* conduits. In the depicted example, *m* = 3, but this is only an example and any other integer may be chosen. Each conduit has a conduit inlet 121 and a conduit outlet 122. In between of the conduit inlet 121 and the conduit outlet is a conduit volume.

The conduits 120 are configured to convey a heat-carrier fluid from the conduit inlets 121 via the conduit volumes in a heat carrier fluid conveying direction 125 to the conduit outlets 122. In a preferred example the heat carrier flow direction 125 is opposite to the raw meal flow direction 115.

Each duct volume 113 is delimited by at least one wall 140. Each of these walls 140 as well delimit at least one conduit 120, hence the wall material provides a barrier blocking a fluid communication between the duct 110 and the neighbored conduit(s) 120. These walls 140 may each have a duct facing surface 141 and a conduit facing surface 142. In the depicted example, the two outer walls 140 have only a conduit facing surface 142, the opposite surface is preferably covered by an optional thermal insulation layer 150. The wall material is a refractory and/or a mineral building material like ceramic, concrete, brick, stone etc. Generally, the material can be described as an inorganic and non-metallic building material. Compared to metals, these materials have poor heat conducting properties, but are cheaper and stay mechanically stable at much higher temperatures than metal materials. Further, even at operating temperatures well above 1000°C the walls remain self-supporting, which provides a further reduced cost of construction. The disadvantage of the low heat conductivity can be compensated by an increase in the heat transferring surface. More precisely but less vivid, relevant is the minimum area of the sectional surfaces in the wall that consist only of surface elements having a normal vector parallel to the direction of heat transport.

In operation, a heat-carrier fluid may be provided to the conduit inlets 121 and may be withdrawn via the conduit outlets 122. The heat carrier fluid may hence pass the conduit volume and may be in direct contact with the conduit facing surfaces 142 of the walls 140. The walls 140 heat up and a heat flow towards the duct facing surface 141 of the wall 140 takes place, while raw meal being provided to the duct volume 113 via the duct inlet 111 passes along the duct facing surface 141 and is thereby heated up. This heat causes the CaCO₃ in the raw meal to decompose into CaO and CO₂. The such obtained CO₂ can be withdrawn from the calciner via the CO₂-outlet 114. The calcined raw meal falls down to the duct outlet 112 and may be removed from the calciner 100. The decomposition of the CaCO₃ provides 1 Mol of CO₂ per Mol CaCO₃, and hence the volume of CO₂ being generated is huge compared to the volume of raw meal. The continuously released CO₂ provides a turbulent flow of CO₂ towards the CO₂-outlet which improves the heat transfer from the duct facing surface 141 of the wall 140 to the CaCO₃ and results in a homogenization of the raw meal.

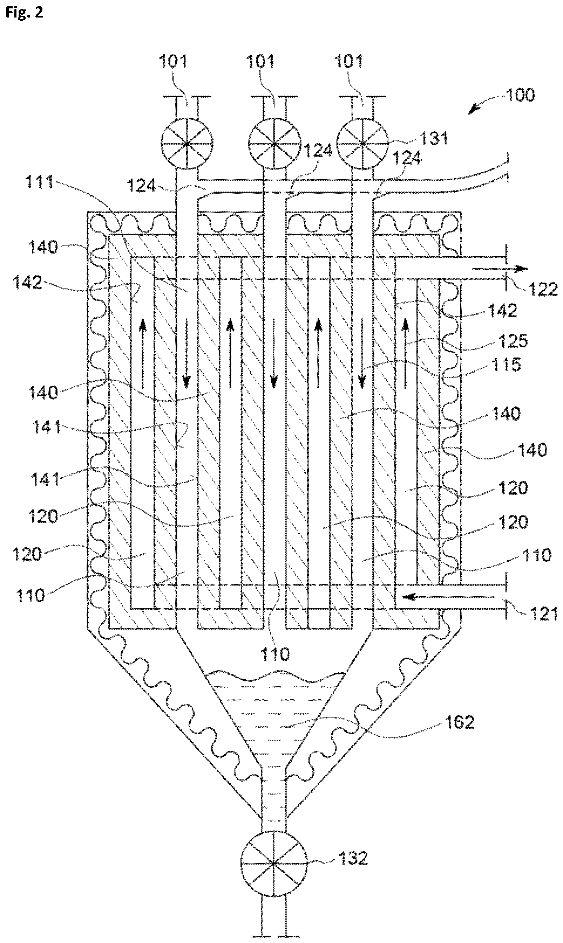

Another example of a calciner is shown in FIG. 2. The description of FIG. 1 can be read on FIG. 2 as well, main differences will be described: The numbers of n ducts and m conduits are different as well as the number of inlet feeders 131 and outlet feeders 132. Different from the example of FIG. 1, the multiple duct outlets 112 in FIG. 2 are connected to a single outlet feeder 132, while each duct inlet 111 is connected to a single inlet feeder 131, providing the advantage of enabling a good control over the raw-meal flow for each duct, while reducing the cost of installation by reducing the number of outlet feeders 132. In practice, the number of outlet feeders 132 is preferably not one to implement redundancy.

Generalizing, the number of inlet feeders is preferably higher than (preferably at least equal to) the number of outlet feeders (not only in the embodiment of FIG. 2, but preferably in any embodiment).

Reference numeral 162 denotes already calcined raw meal, ready to be fed by outlet feed out of the calciner 100.

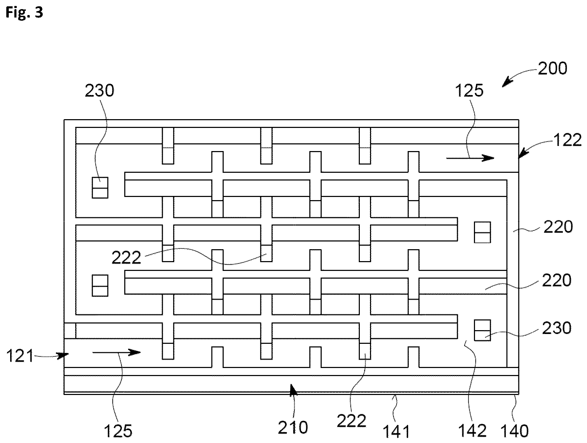

FIG. 3 shows a structure 200 confining an example conduit 120 wherein one wall 140 has been removed to allow visual inspection of the conduit 120. The structure 200 hence may have two walls 140 each with conduit facing surface 142. Lands 220 in between of the two walls 140 delimit the conduit 120 perpendicular to the normal direction of the walls 140 and define the extension of the conduit in the normal direction of the conduit facing surface 142 of the wall 140. The structure 200 may be located next to a duct volume 113 (see e.g. FIG. 1), to thereby confine by at least one of the walls 140 the duct volume 113 towards the conduit 120 (see e.g. Fig. 1). As can be seen, the conduit 120 may be delimited by a conduit facing surface 142 of a wall 140. The conduit 120 may comprise a conduit inlet 121 and/or a conduit outlet 122. Preferably, the conduit inlet 121 is located in a bottom side 210 of the structure 200 and/or in the lower half of a narrow side of the structure 200 (as depicted). The conduit outlet 122 is preferably located in the upper land 220 or as shown in the upper half of a narrow facing side of the structure 200.

As depicted in FIG. 3, the lands 220 may have protrusions 222 extending into the conduit volume 123. The protrusions 222 slow the heat carrier fluid's flow speed down (for a given pressure gradient between the conduit inlet 121 and the conduit outlet 122) and already thereby increase the heat transfer from a heat carrier fluid flowing from conduit inlet 121 to the conduit outlet 122 to the wall 140. Further, the protrusions transform an otherwise at least essentially laminar heat-carrier fluid flow to become at least more turbulent. To this end at least one protrusion may have at least one heat-fluid flow stall edge. Another type of protrusions 230 may extend from the wall 140 into the volume 123. These protrusions 230 as well improve the heat conduction from the heat carrier fluid to the wall 140.

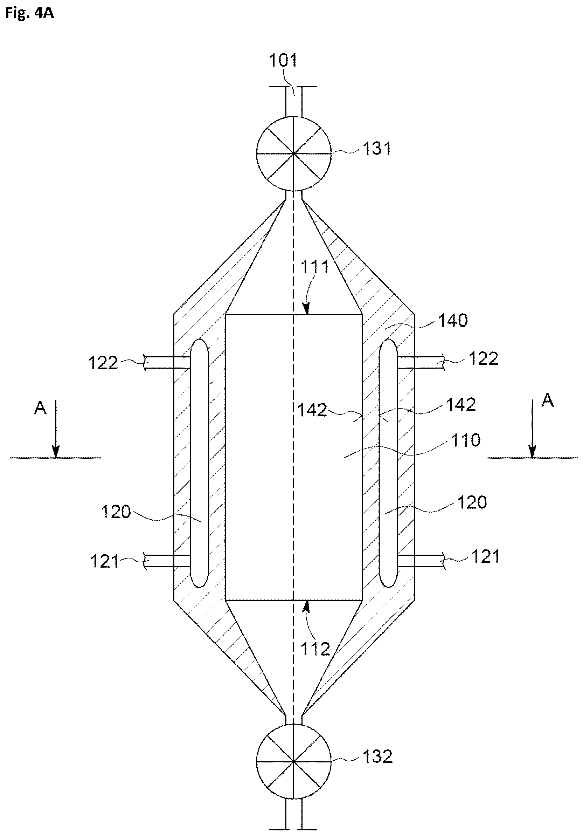

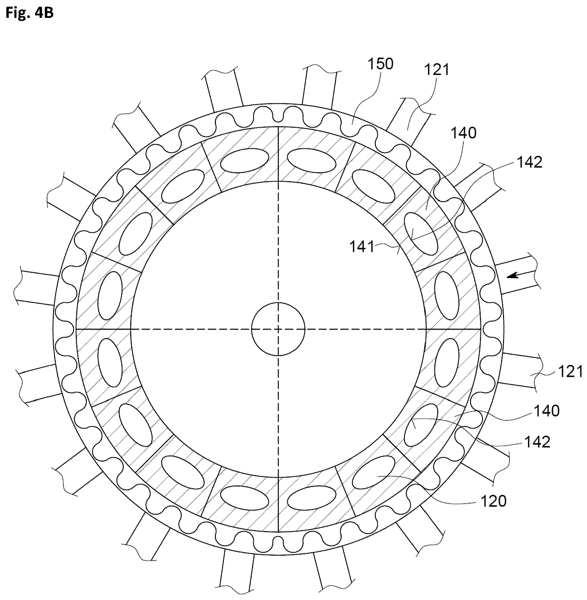

Another example of a calciner is shown in FIG. 4 (comprising FIG. 4A and 4B). The description of FIG. 1 and 2 can as well be read on FIG. 4, main differences will be described: While the examples in FIG. 1 and FIG. 2 have an essentially rectangular horizontal section, the example in FIG. 4 has a round (preferably circular) structure: A single duct 110 is surrounded by a number of conduits 120. The wall 140 may be unitary or comprise stacks as indicated.

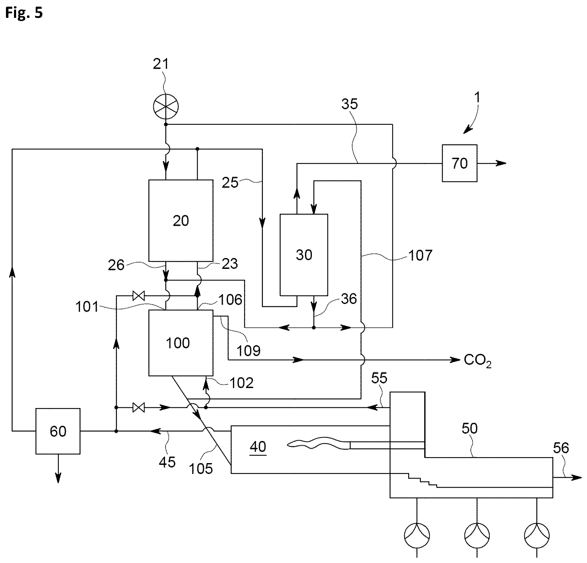

FIG. 5 shows a simplified cement clinker line 1 with a calciner 100. Any of the above described calciners 100 can be used. Sintering of precalcined raw meal to cement clinker may take place in a kiln 40. The optional kiln 40 has a first end with a calcined raw meal inlet (see end of calcined raw meal line) and an exhaust gas outlet, providing the exhaust gas to an exhaust gas outlet 45. The sintered cement clinker is discharged at the second end into a cement clinker cooler 50.

As can be seen in Fig. 5, the calciner 100 may have a calcined raw meal outlet being connected by a calcined raw meal line 105 with the kiln's calcined raw meal inlet. The calciner 100 may further comprise a heat carrier fluid inlet 102, being in fluid communication with at least one conduit inlet 121 (cf. FIG. 1 to 4B). The calciner 100 may further comprise a raw meal inlet 101 being optionally connected by an optional preheated raw meal line 26 with an optional raw meal preheater 20. Raw meal may be provided to the cement clinker line 1 via a raw meal inlet 21, providing the raw meal, e.g. to the raw meal preheater 20. As heat source, exhaust gas (being an example for a heat carrier fluid) being withdrawn from the calciner's heat carrier fluid outlet 106 and/or tertiary air (see tertiary air duct 55) that can be withdrawn from the clinker cooler 50 may be used. Other heat sources may of course be used as well.

The cement clinker line 1 may further comprise an optional carbonator 30. The carbonator 30 may be connected by a calcined raw meal line 107 with the calciner 100 and may hence receive calcined raw meal from the calciner 100. In the carbonator 30 the calcined raw meal may be reacted with CO₂ being comprised in the exhaust gas (e.g. kiln exhaust gas) to CaCO₃. The exhaust gas may be provided by an exhaust gas line 25 from an exhaust gas outlet of the preheater 20 and/or an exhaust gas port of an optional CI-bypass treatment unit 60, which may be configured to remove Chlorine and/or heavy metals from the process.

The CO₂ depleted exhaust gas may be provided via an optional depleted exhaust gas line 35 to an optional exhaust gas treatment facility 70 and/or may be released as indicated by an arrow leaving the exhaust gas treatment facility 70.

The CaCO₃ being produced in the carbonator 30 may be provided via an optional CaCO₃ line to the preheater 20 and/or or the calciner 100 and hence be used to manufacture clinker and/or to provide CaO as required for operating the carbonator 30.

### List of reference numerals

- 1: cement clinker line (optional)
- 20: preheater (optional)
- 21: raw meal inlet
- 23: exhaust gas line (optional)
- 25: exhaust gas line (optional)
- 30: carbonator (optional)
- 35: depleted exhaust gas line
- 36: CaCO₃-supply line
- 40: kiln (optional)
- 45: kiln exhaust gas outlet (optional)
- 50: clinker cooler (optional)
- 55: tertiary air duct (optional)
- 56: clinker
- 60: CI-bypass (optional)
- 70: exhaust gas treatment (optional)

- 100: calciner
- 101: raw meal inlet of calciner 100 (optional)
- 102: heat carrier fluid inlet of calciner 100 (optional)
- 105: calcined raw meal line(optional)
- 106: heat carrier fluid outlet of calciner 100 (optional)
- 107: calcined raw meal line (optional)
- 109: CO₂- outlet of calciner (optional)
- 110: raw meal duct / duct (optional)
- 111: raw meal inlet / duct inlet (optional)
- 112: raw meal outlet / duct outlet (optional)
- 113: duct volume (optional)
- 114: CO₂ outlet (optional)
- 115: raw meal conveying direction (optional)

- 120: heat-carrier fluid conduit / conduit (optional)
- 121: heat-carrier fluid inlet / conduit inlet (optional)
- 122: heat-carrier fluid outlet / conduit outlet (optional) heat-carrier fluid volume (optional)
- 125: heat-carrier fluid conveying direction (optional)

- 131: raw meal inlet feeder (optional)
- 132: raw meal outlet feeder (optional)

- 140: wall (optional)
- 141: duct facing surface of wall (optional)
- 142: conduit facing surface of wall (optional)
- 145: insulation layer facing surface of wall (optional)

- 150: thermal insulation layer (optional)
- 162: calcined raw meal
- 200: structure (optional)
- 210: bottom of structure (optional)
- 220: land (optional)
- 222: protrusion (optional)
- 230: protrusion (optional)

## Claims

1. A calciner (100) for a cement clinker manufacturing line (1), comprising at least
- a first duct (110) with a first raw meal inlet (111) and a first raw meal outlet (112) being in fluid communication via a first duct volume (113),
- a first conduit (120) with a first heat carrier fluid inlet (121) and a first heat carrier fluid outlet (122) being in fluid communication via a first conduit volume,
- a first wall (140) made of a wall material having a first duct facing surface (141) at a first duct facing side and a first conduit facing surface (142) at a conduit facing side, wherein the first duct facing surface (141) and the first conduit facing surface (142) are separated by the wall material and
wherein the first duct volume (113) is delimited by the first duct facing surface (141) and the first conduit volume is delimited by the first conduit facing surface (142) of said first wall (140),
**characterized in that**
the first wall material includes or consists of a mineral wall material and/or a refractory.

2. The calciner (100) of claim 1, **characterized in that**
the calciner (100) has a second wall (140) with a second duct facing surface (141) and a second conduit facing surface (142), and **in that** the second duct facing surface (141) delimits the first duct (110).

3. The calciner (100) of the previous claim, **characterized in that** it further comprises a second conduit (120) with a second heat carrier fluid inlet (121) and a second heat carrier fluid outlet (122) being in fluid communication via a second conduit volume and **in that** the second conduit facing surface (142) delimits the second conduit (120).

4. The calciner (100) of one of the previous claims, **characterized in that** the calciner (100) comprises:
- at least a number of at least *l* walls, wherein at least *l* - 2 of the *l* walls have/has a duct facing side with a duct facing surface and a conduit facing side with conduit facing surface,
- a number of at least *n* = *Int*(*l*/2 - 1) ducts, wherein at least *n* - 2 of the n ducts are/is delimited by at least two of the at least *l* - 2 duct facing surfaces, and
- a number of at least m = *Int*(*l*/2 - 1) conduits, wherein at least m - 1 conduits are delimited by at least two of the at least *l* - 2 conduit facing surfaces.

5. The calciner (100) of one of the previous claims, **characterized in that** at least the first duct (110) has a CO₂-outlet (114) configured to provide a stream of CO₂ being released by thermal decomposition of CaCO₃ comprised in the raw meal in the duct volume (113).

6. The calciner (100) of the previous claim, **characterized in that** the CO₂-outlet (114) is connected to a dust collector inlet of a dust collector (75), wherein the dust collector is configured to separate raw meal dust from a gaseous fraction of the CO₂ stream.

7. The calciner (100) of the previous claim, **characterized in that** the dust collector (75) has a dust outlet being connected to the duct inlet (111) and/or a raw meal inlet of a cement clinker kiln and/or to a CaO-inlet of a carbonator.

8. The calciner (100) of one of the previous claims, **characterized in that** the first duct (110) is a chute.

9. The calciner (100) of one of the previous claims, **characterized in that** the Carbon Dioxide outlet (114) is located above the raw meal inlet (111).

10. The calciner (100) of one of the previous claims, **characterized in that** the at least one of the conduit facing surfaces (142) has protrusions (222,230).

11. The calciner (100) of one of the previous claims, **characterized in that** the heat carrier fluid inlet comprises and/or is connected to a fuel inlet.

12. A cement clinker line (1), **characterized in that** the cement clinker line comprises at least one calciner (100) of one of the previous claims.

13. The cement clinker line (1) of claim 12, **characterized in that** the cement clinker line (1) further comprises a kiln (40) with a first end and a second end, wherein the first end comprises a calcined raw meal inlet and an exhaust gas outlet and wherein the second end comprises a hot clinker outlet and wherein the duct outlet is connected via a calcined raw meal conveyor (105) with the calcined raw meal inlet and/or wherein the exhaust gas outlet is connected to the heat carrier fluid inlet.

14. The cement clinker line (1) of claim 12 or 13, **characterized in that** the cement clinker line (1) further comprises a clinker cooler (50) with a coolant inlet and a coolant outlet and with a hot clinker inlet and a cool clinker outlet and **in that** the coolant outlet is connected with the heat carrier inlet.

## Patentansprüche

1. Kalzinator (100) für eine Zementherstellungslinie (1), wenigstens aufweisend
- einen ersten Kanal (110) mit einem ersten Rohmehleinlass (111) und einem ersten Rohmehlauslass (112), die sich über ein erstes Kanalvolumen (113) in einer Fluidverbindung befinden,
- eine erste Leitung (120) mit einem ersten Wärmeträgerfluideinlass (121) und einem ersten Wärmeträgerfluidauslass (122), die sich über ein erstes Leitungsvolumen in einer Fluidverbindung befinden,
- eine erste Wand (140) bestehend aus einem Wandmaterial, welche eine erste dem Kanal zugewandte Oberfläche (141) an einer ersten dem Kanal zugewandten Seite und eine erste der Leitung zugewandte Oberfläche (142) an einer der Leitung zugewandten Seite aufweist, wobei die erste dem Kanal zugewandte Oberfläche (141) und die erste der Leitung zugewandte Oberfläche (142) durch das Wandmaterial getrennt sind und
wobei das erste Kanalvolumen (113) durch die erste dem Kanal zugewandte Oberfläche (141) und das erste Leitungsvolumen durch die erste der Leitung zugewandte Oberfläche (142) der ersten Wand (140) begrenzt werden,
**dadurch gekennzeichnet, dass**
das erste Wandmaterial ein mineralisches Wandmaterial und/oder ein Feuerfestmaterial beinhaltet.

2. Kalzinator (100) nach Anspruch 1, **dadurch gekennzeichnet, dass** der Kalzinator (100) eine zweite Wand (140) aufweist mit einer zweiten dem Kanal zugewandten Oberfläche (141) und einer zweiten der Leitung zugewandten Oberfläche (142), und dass die zweite dem Kanal zugewandte Oberfläche (141) den ersten Kanal (110) begrenzt.

3. Kalzinator (100) nach dem vorhergehenden Anspruch, **dadurch gekennzeichnet, dass** er weiterhin eine zweite Leitung (120) mit einem zweiten Wärmeträgerflu-ideinlass (121) und einem zweiten Wärmeträgerfluidauslass (122) beinhaltet, die sich über ein zweites Leitungsvolumen in einer Fluidverbindung befinden, und dass die zweite der Leitung zugewandte Oberfläche (142) die zweite Leitung (120) begrenzt.

4. Kalzinator (100) nach einem der vorhergehenden Ansprüche, **dadurch gekennzeichnet, dass** der Kalzinator (100) beinhaltet:
- zumindest eine Anzahl von wenigstens *l* Wänden, wobei wenigstens *l* - 2 der *l* Wände eine dem Kanal zugewandte Seite mit einer dem Kanal zugewandten Oberfläche und eine der Leitung zugewandte Seite mit einer der Leitung zugewandten Oberfläche aufweisen/aufweist,
- eine Anzahl von wenigstens *n* = *Int*(*l*/2 - 1) Kanälen, wobei wenigstens n - 2 der n Kanäle durch wenigstens zwei der wenigstens *l -* 2 dem Kanal zugewandten Oberflächen begrenzt sind/ist, und
- eine Anzahl von wenigstens m = *Int*(*l*/2 - 1) Leitungen, wobei wenigstens *m* - 1 Leitungen durch wenigstens zwei der wenigstens *l* - 2 der Leitung zugewandten Oberflächen begrenzt sind.

5. Kalzinator (100) nach einem der vorhergehenden Ansprüche, **dadurch gekennzeichnet, dass** wenigstens der erste Kanal (110) einen CO₂-Auslass (114) aufweist, der so konfiguriert ist, dass er einen durch die thermische Zersetzung des im Rohmehl im Kanalvolumen (113) enthaltenen CaCO₃ freigesetzten CO₂-Strom bereitstellt.

6. Kalzinator (100) nach dem vorhergehenden Anspruch, **dadurch gekennzeichnet, dass** der CO₂-Auslass (114) mit einem Staubeinlass einer Staubsammelvorrichtung (75) verbunden ist, wobei die Staubsammelvorrichtung zur Trennung von Rohmehlstaub von einem gasförmigen Anteil des CO₂-Stroms eingerichtet ist.

7. Kalzinator (100) nach dem vorhergehenden Anspruch, **dadurch gekennzeichnet, dass** die Staubsammelvorrichtung (75) einen Staubauslass aufweist, der mit dem Kanaleinlass (111) und/oder einem Rohmehleinlass eines Zementklinkerofens und/oder einem CaO-Einlass eines Karbonators verbunden ist.

8. Kalzinator (100) nach einem der vorhergehenden Ansprüche, **dadurch gekennzeichnet, dass** der erste Kanal (110) eine Schurre ist.

9. Kalzinator (100) nach einem der vorhergehenden Ansprüche, **dadurch gekennzeichnet, dass** der Kohlendioxidauslass (114) sich oberhalb des Rohmehleinlasses (111) befindet.

10. Kalzinator (100) nach einem der vorhergehenden Ansprüche, **dadurch gekennzeichnet, dass** die wenigstens eine der der Leitung zugewandten Oberflächen (142) Vorsprünge (222,230) aufweist.

11. Kalzinator (100) nach einem der vorhergehenden Ansprüche, **dadurch gekennzeichnet, dass** der Wärmeträgerfluideinlass einen Brennstoffeinlass beinhaltet und/oder damit verbunden ist.

12. Zementklinkerlinie (1), **dadurch gekennzeichnet, dass** die Zementklinkerlinie wenigstens einen Kalzinator (100) nach einem der vorhergehenden Ansprüche beinhaltet.

13. Zementklinkerlinie (1) nach Anspruch 12, **dadurch gekennzeichnet, dass** die Zementklinkerlinie (1) weiterhin einen Ofen (40) beinhaltet, mit einem ersten Ende und einem zweiten Ende, wobei das erste Ende einen Einlass für kalziniertes Rohmehl und einen Abgasauslass beinhaltet und wobei das zweite Ende einen Auslass für heißen Klinker beinhaltet und wobei der Kanalauslass über einen Förderer für kalziniertes Rohmehl (105) mit dem Einlass für kalziniertes Rohmehl verbunden ist und/oder wobei der Abgasauslass mit dem Wärmeträgerfluideinlass verbunden ist.

14. Zementklinkerlinie (1) nach Anspruch 12 oder 13, **dadurch gekennzeichnet, dass** die Zementklinkerlinie (1) weiterhin einen Klinkerkühler (50) beinhaltet, mit einem Kühlmitteleinlass und einem Kühlmittelauslass und mit einem Einlass für heißen Klinker und einem Auslass für kalten Klinker und dass der Kühlmittelauslass mit dem Wärmeträgereinlass verbunden ist.

## Revendications

1. Calcinateur (100) destiné à une ligne de fabrication de clinker de ciment (1), comprenant au moins
- une première conduite (110) avec une première entrée de farine crue (111) et une première sortie de farine crue (112) en communication fluidique via un premier volume (113) de conduite,
- un premier conduit (120) avec une première entrée de fluide caloporteur (121) et une première sortie de fluide caloporteur (122) en communication fluidique via un premier volume de conduit,
- une première paroi (140) constituée d'un matériau de paroi ayant une première surface (141) en regard de la conduite au niveau d'un premier côté en regard de la conduite et une première surface (142) en regard du conduit au niveau d'un premier côté en regard du conduit, dans lequel la première surface (141) en regard de la conduite et la première surface (142) en regard du conduit sont séparées par le matériau de paroi et
dans lequel le premier volume (113) de conduite est délimité par la première surface (141) en regard de la conduite et le premier volume de conduit est délimité par la première surface (142) en regard du conduit de ladite première paroi (140),
**caractérisé en ce que**
le matériau de première paroi inclut ou consiste en un matériau de paroi minéral et/ou en un matériau réfractaire.

2. Calcinateur (100) selon la revendication 1, **caractérisé en ce que**
le calcinateur (100) comporte une deuxième paroi (140) avec une deuxième surface (141) en regard de la conduite et une deuxième surface (142) en regard du conduit, et **en ce que** la deuxième surface (141) en regard de la conduite délimite la première conduite (110).

3. Calcinateur (100) selon la revendication précédente, **caractérisé en ce qu'**il comprend en outre un deuxième conduit (120) avec une deuxième entrée de fluide caloporteur (121) et une deuxième sortie de fluide caloporteur (122) en communication fluidique via un deuxième volume de conduit, et **en ce que** la deuxième surface (142) en regard du conduit délimite le deuxième conduit (120).

4. Calcinateur (100) selon l'une des revendications précédentes, **caractérisé en ce que** le calcinateur (100) comprend :
- au moins un nombre d'au moins *l* parois, dans lequel au moins *l* - 2 des *l* parois ont un côté en regard de la conduite avec une surface en regard de la conduite et un côté en regard du conduit avec une surface en regard du conduit,
- un nombre d'au moins *n* = *Int*(*l*/2 **- 1)** conduites, dans lequel au moins *n* - 2 des *n* conduites sont délimités par au moins deux des au moins *l* - 2 surfaces en regard de la conduite, et
- un nombre d'au moins *m* = *Int*(*l*/2 **-** 1) conduits, dans lequel au moins *m* - 1 conduits sont délimités par au moins deux des au moins *l* - 2 surfaces en regard du conduit.

5. Calcinateur (100) selon l'une des revendications précédentes, **caractérisé en ce qu'**au moins la première conduite (110) comporte une sortie de CO₂ (114) configurée pour fournir un flux de CO₂ libéré par décomposition thermique de CaCO₃ compris dans la farine crue dans le volume (113) de conduite.

6. Calcinateur (100) selon la revendication précédente, **caractérisé en ce que**
la sortie de CO₂ (114) est reliée à une entrée de dépoussiéreur d'un dépoussiéreur (75), dans lequel le dépoussiéreur est configuré pour séparer la poussière de farine crue d'une fraction gazeuse du flux de CO₂.

7. Calcinateur (100) selon la revendication précédente, **caractérisé en ce que**
le dépoussiéreur (75) comporte une sortie de poussière reliée à l'entrée (111) de conduite et/ou à une entrée de farine crue d'un four à clinker de ciment et/ou à une entrée de CaO d'un carbonateur.

8. Calcinateur (100) selon l'une des revendications précédentes, **caractérisé en ce que** la première conduite (110) est une goulotte.

9. Calcinateur (100) selon l'une des revendications précédentes, **caractérisé en ce que** la sortie de dioxyde de carbone (114) est située au-dessus de l'entrée de farine crue (111).

10. Calcinateur (100) selon l'une des revendications précédentes, **caractérisé en ce que** l'au moins une des surfaces (142) en regard du conduit comporte des saillies (222, 230).

11. Calcinateur (100) selon l'une des revendications précédentes, **caractérisé en ce que** l'entrée de fluide caloporteur comprend et/ou est reliée à une entrée de combustible.

12. Ligne de clinker de ciment (1), **caractérisée en ce que** la ligne de clinker de ciment comprend au moins un calcinateur (100) de l'une des revendications précédentes.

13. Ligne de clinker de ciment (1) selon la revendication 12, **caractérisée en ce que** la ligne de clinker de ciment (1) comprend en outre un four (40) avec une première extrémité et une deuxième extrémité, dans laquelle la première extrémité comprend une entrée de farine crue calcinée et une sortie de gaz d'échappement et dans laquelle la deuxième extrémité comprend une sortie de clinker chaud et dans laquelle la sortie de conduite est reliée via un convoyeur de farine crue calcinée (105) à l'entrée de farine crue calcinée et/ou dans laquelle la sortie de gaz d'échappement est reliée à l'entrée de fluide caloporteur.

14. Ligne de clinker de ciment (1) selon la revendication 12 ou 13, **caractérisée en ce que** la ligne de clinker de ciment (1) comprend en outre un refroidisseur de clinker (50) avec une entrée de fluide de refroidissement et une sortie de fluide de refroidissement, ainsi qu'une entrée de clinker chaud et une sortie de clinker froid, et **en ce que** la sortie de fluide de refroidissement est reliée à l'entrée de fluide caloporteur.
